# EUROPÄISCHE PATENTSCHRIFT

(11) **EP 0 825 932 B1**
(45) Veröffentlichungstag und Bekanntmachung des Hinweises auf die Patenterteilung: **14.07.1999**
(21) Anmeldenummer: 96914204.1
(22) Anmeldetag: 13.05.1996
(51) Int. Cl.: B60J 10/04, B60J 10/06, B60J 10/00

(54) **DICHTUNG FÜR EINE SEITENSCHEIBE EINES AUTOMOBILS**
SEAL FOR A SIDE WINDOW OF AN AUTOMOBILE
JOINT D'ETANCHEITE POUR VITRE LATERALE D'UNE AUTOMOBILE

(30) Priorität: 13.05.1995 DE 19517410
(43) Veröffentlichungstag der Anmeldung: 04.03.1998
(73) Patentinhaber: AMI DODUCO GmbH, 75181 Pforzheim (DE)
(72) Erfinder: SCHULZE, Gunter, Lothar, D-75228 Ispringen (DE); NORMANN, Norbert, D-75223 Niefern-Öschelbronn (DE)
(74) Vertreter: Twelmeier, Ulrich, Dipl. Phys.
(86) Internationale Anmeldenummer: EP9602044
(87) Internationale Veröffentlichungsnummer: WO9635592

(56) Entgegenhaltungen:
- EP-A- 0 322 286
- EP-A- 0 336 786
- US-A- 1 919 130
- US-A- 1 934 816

## Beschreibung

### Technisches Gebiet:

Die Erfindung befaßt sich mit einer Dichtung mit den im Oberbegriff des Anspruchs 1 angegebenen Merkmalen für den oberen Rand einer motorisch versenkbaren Seitenscheibe eines Automobils. Eine solche Dichtung ist aus der DE 41 24 495 A1 bekannt.

### Stand der Technik:

Aus der EP-A-0 322 286 und der EP-A-0 336 786 sind Dichtungen bekannt, die fest auf den Rand einer Karosserie eines Automobils montiert werden. In den U-förmigen Dichtungen sind Federelemente angeordnet, die dazu dienen, daß das Ende der Karosserie in der Dichtung festgeklemmt wird.

Scheibenheberantriebe werden in Automobilen üblicherweise direkt mittels Bedientasten geschaltet. Läuft die Fensterscheibe gegen einen Anschlag, so steigt der Strom des die Fensterscheibe bewegenden Gleichstrommotors stark an. Das dabei entwickelte Stillstandsdrehmoment des Motors ist beträchtlich, und werden Personen beim Schließen der Fensterscheibe eingeklemmt, besteht Verletzungsgefahr. Es ist sogar bereits zu tödlichen Unfällen von Kindern gekommen. Es ist deshalb erforderlich, die Bewegung der Fensterscheiben zu kontrollieren.

Zu diesem Zweck ist es aus der WO-A-95/02268 bekannt, die Stromaufnahme des elektrischen Gleichstrommotors auszuwerten. Es hat sich nämlich gezeigt, daß aus dem zeitlichen Verlauf des Motorstromes ein Kriterium für das Auftreten einer gefährlichen Situation, wie sie das Einklemmen eines Körperteils ist, hergeleitet werden kann. Läuft die Fensterscheibe gegen einen ihrer Endanschläge, so daß sie ganz geöffnet oder ganz geschlossen ist, dann beobachtet man einen charakteristischen, steilen, schnellen Anstieg der Stromstärke. Wird jedoch ein menschlicher Körperteil eingeklemmt, dann steigt die Stromstärke zwar auch an, zunächst aber weniger steil.

Der Laststrom des Gleichstrommotors zeigt beim Heben der Scheibe einen typischen Stromstärkeverlauf: Nach einem hohen Anlaufstrom und einer kurzen Einschwingphase steigt der Laststrom infolge der Reibung der Scheibe an ihren Seitenführungen und Dichtungen allmählich an, um dann, wenn die Scheibe mit ihrem oberen Rand in die dafür vorgesehene obere Anschlagdichtung einläuft, steil anzusteigen. Bei der Auswertung des Laststromes kommt es unter anderem darauf an, den Anstieg der Stromstärke infolge des Einlaufens der Scheibe in die obere Anschlagdichtung zu unterscheiden von dem Anstieg der Stromstärke beim Einklemmen eines menschlichen Körperteils, denn im zuletzt genannten Fall soll die gefährliche Situation erkannt und die Drehrichtung des Motors umgekehrt werden, nicht jedoch beim Einlaufen in die obere Anschlagdichtung. Die WO-A-95/02268 schlägt deshalb vor, den typischen Stromstärkeverlauf, der beim Einfahren der Scheibe in ihre obere Anschlagdichtung auftritt, zu speichern, mit dem aktuellen Stromstärkeverlauf zu vergleichen und bei Übereinstimmung innerhalb einer vorgewählten Toleranzbreite um den gespeicherten Stromstärkeverlauf herum kein Signal zur Drehrichtungsumkehr des Gleichstrommotors abzugeben.

Eine gewisse Schwierigkeit ergibt sich in diesem Zusammenhang daraus, daß der Stromstärkeverlauf beim Einfahren in die obere Anschlagdichtung keineswegs unter allen Umständen gleich ist, sondern durch eine Reihe von Randbedingungen beeinflußt wird, insbesondere von der Temperatur, von der Alterung und dem Verschleiß der Dichtung, vom Verschmutzungsgrad der Dichtung und der Scheibe und von der Witterung (z.B. Eisbildung). Andererseits beobachtet man sowohl beim Einfahren der Scheibe in ihre obere Anschlagdichtung als auch beim Einklemmen eines Körperteils zunächst einen mäßigen Anstieg der Stromstärke (Beginn des Einlaufens in die Dichtung bzw. Kompression des weichen Körperteils) gefolgt von einem steilen Anstieg der Stromstärke (die Scheibe wird durch ihren Endanschlag bzw. durch das Auftreffen auf einen Knochen gebremst). Das Einfahren der Scheibe in ihre obere Anschlagdichtung kann deshalb im Einzelfall schwierig zu unterscheiden sein von einer gefährlichen Situation. Gibt man bei der Auswertung der menschlichen Sicherheit den Vorrang, dann kann das zur Folge haben, daß das Einfahren der Scheibe in die obere Anschlagdichtung wegen geänderter Randbedingungen als gefährliche Situation interpretiert und die Drehrichtung des Scheibenhebermotors unnötigerweise umgekehrt wird.

### Darstellung der Erfindung:

Der vorliegenden Erfindung liegt die **Aufgabe** zugrunde, einen Weg aufzuzeigen, wie die Häufigkeit solcher aus Sicherheitsgründen möglichen Fehlbeurteilungen des Stromstärkeverlaufs verringert werden kann.

Diese Aufgabe wird gelöst durch eine Dichtung mit den im Anspruch 1 angegebenen Merkmalen. Vorteilhafte Weiterbildungen der Erfindung sind Gegenstand der abhängigen Ansprüche.

Die Erfindung sucht zur Lösung der gestellten Aufgabe nicht ein verfeinertes Auswerteverfahren für den Stromstärkeverlauf, sondern geht stattdessen den Weg, die elastischen Reaktionskräfte, mit welchen die Dichtung beim Einlaufen des Randes der Seitenscheibe auf deren Antrieb einwirkt, in charakteristischer Weise zu verändern und dadurch von den Reaktionskräften, die beim Einklemmen eines Körperteils auftreten, leichter unterscheidbar zu machen. Dies gelingt dadurch, daß man den Aufbau der Dichtung ändert, indem man zwischen wenigstens einer der Dichtlippen, die beim Einlaufen in die Dichtung zur Seite gedrängt werden, und dem Schenkel des U-förmigen Grundkörpers der Dichtung,von welchem die betreffende Dichtlippe ausgeht, zusätzlich eine Feder anordnet, welche die aus dem gummielastischen Verhalten der Dichtlippe sich ergebenden Reaktionskräfte in charakteristischer Weise verändert.

Diese Veränderung kann in einer vorteilhaften Ausgestaltung der Erfindung z.B. dadurch bewirkt sein, daß die Feder ein Fortsatz der Dichtlippe ist, der - solange die Scheibe sich außerhalb der Dichtung befindet - Abstand von dem Schenkel des Grundkörpers der Dichtung hat, von welchem die Dichtlippe ausgeht. Läuft die Scheibe in eine so ausgebildete Dichtung ein, dann wird die Dichtlippe zunächst, wie bei einer herkömmlichen Dichtung, zur Seite gedrängt, was einen verhältnismässig geringen Anstieg der Stromstärke zur Folge hat, bis der Fortsatz auf den Schenkel des U-förmigen Grundkörpers der Dichtung trifft und dadurch plötzlich ein steilerer Anstieg der Stromstärke auftritt, weil sich nun durch das Verformen der Feder eine zusätzliche, definierte Gegenkraft aufbaut.

Dichtungen für den Rand einer Seitenscheibe werden üblicherweise durch Extrudieren hergestellt. An der Dichtlippe zusätzlich einen Fortsatz auszubilden, ist durch Extrudieren problemlos möglich, auch im Falle von komplizierten Querschnittsformen, die für das Erzielen einer charakteristischen Federsteifigkeit ausgewählt werden.

Der als Feder dienende Fortsatz könnte im Querschnitt massiv sein. Zur Erzielung einer definierten, charakteristischen Gegenkraft ist es jedoch günstiger, den Fortsatz hohl, z.B. schlauchförmig, auszubilden, oder die Dichtlippe insgesamt als Hohlkammerprofil auszubilden.

Alternativ ist es aber auch möglich, die Dichtlippe unverändert zu belassen wie beim Stand der Technik und stattdessen an der Innenseite des zugehörigen Schenkels des U-förmigen Grundkörpers einen Fortsatz, insbesondere mit hohlem Querschnitt, vorzusehen. Auch in diesem Fall hat man beim Einfahren der Seitenscheibe in die Dichtung zunächst einen mäßigen Anstieg der Stromstärke, solange die Reaktionskräfte lediglich durch Reibung an der Dichtung und Wegbiegen der Dichtlippe verursacht sind. Trifft die Dichtlippe dann aber auf den Fortsatz, welcher am angrenzenden Schenke des U-förmigen Grundkörpers ausgebildet ist, steigt die Stromstärke plötzlich steil an, weil eine definierte Gegenkraft aufgebaut wird.

In einer anderen vorteilhaften Ausbildung der Erfindung ist die Feder, die zwischen der Dichtlippe und dem Schenke des U-förmigen Grundkörpers, von welchem sie ausgeht, eine metallische Blattfeder. Die metallische Blattfeder hat den Vorteil, daß ihre elastische Rückstellkraft im Gegensatz zu einer gummielastischen Feder weitgehend temperaturunabhängig ist und als Folge des Hook'schen Gesetzes wohl definiert und reproduzierbar ist, was die Unterscheidung des Weg-Kraftverlaufes beim Einfahren der Seitenscheibe in die Dichtung vom Weg-Kraftverlauf beim Einklemmen eines menschlichen Körperteils erleichtert. Die Metallfeder kann unterschiedlich aufgebaut sein und auf unterschiedliche Weise gehalten werden. Besonders geeignet ist eine Blattfeder mit keilförmigem Profil. Im einfachsten Fall kann sie lose in die Dichtung eingelegt werden; sie liegt dann unverlierbar zwischen der Dichtlippe und dem Schenke des U-förmigen Grundkörpers, von welchem die Dichtlippe ausgeht, denn die Dichtlippe und dieser Schenkel bilden gemeinsam im Querschnitt ein ebenfalls keilförmiges Profil. Die Keilform der Blattfeder und die Keilform der Anordnung aus Dichtlippe und Schenkel des U-förmigen Grundkörpers können einander angenähert sein. Der Weg-Kraftverlauf beim Einfahren der Seitenscheibe in die Dichtung wird dann im wesentlichen von dem wohl definierten elastischen Verhalten der Feder bestimmt. Es ist aber auch möglich, den Keilwinkel der Blattfeder kleiner zu wählen als den Keilwinkel zwischen der Dichtlippe und dem Schenkel des Grundkörpers, von welchem sie ausgeht; in diesem Fall wirkt auf die Seitenscheibe und damit auf deren Antrieb beim Einfahren der Seitenscheibe in die Dichtung anfänglich lediglich eine Reaktionskraft infolge elastomerer Verbiegung der Dichtlippe und kurz danach, wenn die keilförmige Blattfeder zusammengedrückt wird, folgt eine wesentlich höhere und steiler ansteigende Reaktionskraft infolge des elastischen Verbiegens der Blattfeder.

Anstatt die Blattfeder lose einzulegen, kann sie natürlich auch mit der Dichtlippe und/oder mit dem angrenzenden Schenke des U-förmigen Grundkörpers verbunden, z.B. verklebt oder durch Vulkanisieren verbunden sein.

In vorteilhafter Weiterbildung der Erfindung kann die metallische Feder über die Länge verteilt Ausnehmungen haben. Art und Anzahl der Ausnehmungen können ausgewählt werden, um eine bestimmte, vorgebbare Federcharakteristik zu erzeugen. Eine andere vorteilhafte Möglichkeit besteht darin, nicht eine einzige, sich über die volle Länge der Dichtung erstreckende Blattfeder, sondern eine Folge von kürzeren Blattfedern vorzusehen, welche mit Abstand hintereinander längs der Dichtung angeordnet werden. In diesem Fall kann über das Verhältnis von Länge der Blattfeder zur Länge der Lücke zwischen zwei Blattfedern gezielt eine gewünschte Federcharakteristik eingestellt werden.

Die Verwendung einer metallischen Feder, insbesondere einer Blattfeder, hat den weiteren Vorteil, daß die Dichtlippe, welche durch die Feder gestützt wird, verglichen mit dem Stand der Technik geschwächt ausgebildet werden kann, weil die für eine zuverlässige Abdichtung erforderliche Andrückkraft der Dichtlippe gegen die Fensterscheibe nicht mehr von der Dichtlippe selbst erbracht werden muß, sondern von der stützenden, Metallfeder erbracht werden kann. Durch das Einsetzen einer definierten Anzahl von Federelementen in ein Dichtungsprofil mit geschwächter Dichtlippe kann weitgehend unabhängig von der Länge der Dichtung ein konstanter Kraft-Weg-Verlauf erzeugt werden, so daß für unterschiedliche Türen die Auswertung des Laststromes des Scheibenhebermotors auf die gleiche Weise erfolgen kann, soweit in den unterschiedlichen Türen dieselbe Art und Anzahl von Federelementen zum Einsatz kommt.

Bei den heute gebräuchlichen Dichtungen für die Seitenscheiben in Automobilen geht im allgemeinen von beiden Schenkeln des U-förmigen Grundkörpers eine Dichtlippe aus, die sich in den Innenraum des Grundkörpers erstreckt, und zwar von dem einen Schenke eine längere Dichtlippe und von dem anderen Schenkel eine kürzere Dichtlippe. In diesem Fall empfiehlt es sich, die Feder zwischen der längeren Dichtlippe und dem Schenkel, von welchem sie ausgeht, anzuordnen. Es ist aber auch möglich, beiden Dichtlippen je eine Feder zuzuordnen. Die Erfindung ist ferner anwendbar auf Dichtungsprofile, bei denen von einem Schenkel mehr als zwei Dichtlippen ausgehen und in den Innenraum des Grundkörpers ragen. Auch in diesem Fall wird vorzugsweise nur einer der Dichtlippen eine Feder zugeordnet; es ist aber auch möglich, mehreren oder allen Dichtlippen jeweils eine Feder zuzuordnen.

Zur weiteren Erläuterung der Erfindung sind Zeichnungen beigefügt.

### Kurze Beschreibung der Zeichnungen:

- Figur 1: zeigt ein erstes Ausführungsbeispiel eines erfindungsgemäßen Dichtungsprofils im Querschnitt,
- Figur 2: zeigt ein zweites Ausführungsbeispiel eines erfindungsgemäßen Dichtungsprofils im Querschnitt,
- Figur 3: zeigt ein Dichtungsprofil gemäß dem Stand der Technik im Querschnitt.

Gleiche und einander entsprechende Teile sind in den Figuren mit übereinstimmenden Bezugszahlen bezeichnet.

### Wege zur Ausführung der Erfindung:

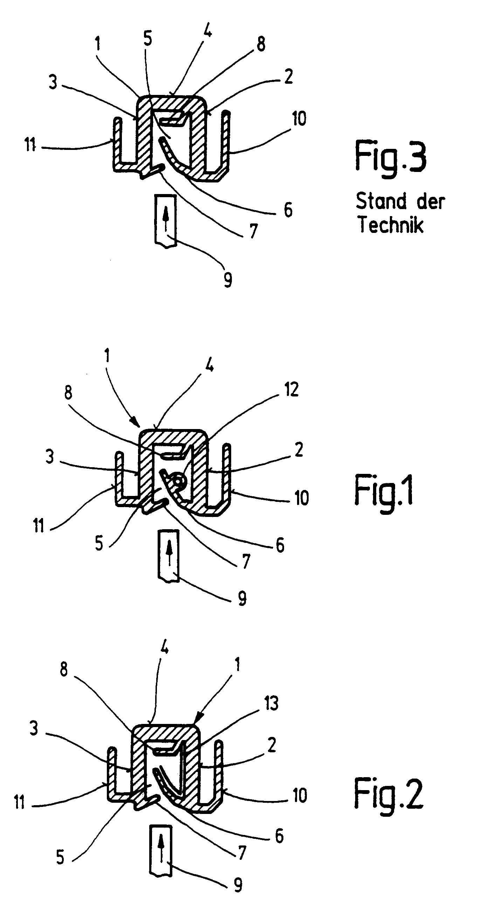

Die in Figur 3 dargestellte Dichtung hat einen im Querschnitt U-förmigen Grundkörper 1 mit zwei zueinander parallelen Schenkeln 2 und 3 und einer sie verbindenen Basis 4. Der Grundkörper 1 umschließt einen Innenraum 5, in welchen zwei Dichtlippen 6 und 7 hineinragen, von denen die Dichtlippe 6 wesentlich länger ist als die Dichtlippe 7. Die Dichtlippe 6 geht von der nach unten weisenden Spitze des Schenkels 2 aus und ragt bogenförmig und schräg nach oben gerichtet in den Innenraum 5 hinein. Die kurze Dichtlippe 7 ragt im wesentlichen geradlinig von der nach unten weisenden Spitze des Schenkels 3 in den Innenraum 5 hinein und ist gegen die Dichtlippe 6 gerichtet.

Auf der Basis 4 fußt ein im Querschnitt abgewinkelter Fortsatz 8, gegen welchen eine von unten her in die Dichtung einfahrende Seitenscheibe 9 schließlich anstößt.

Als Hilfsmittel für das Einsetzen der Dichtung in einen Türrahmen sind ferner noch zwei aussenseitlich des Grundkörpers 1 angeordnete, von den Spitzen der Schenke 2 und 3 ausgehende und sich im wesentlichen parallel zu diesen erstreckende Schenke 10 und 11 vorgesehen.

Die Dichtung ist üblicherweise ein aus elastomerem Werkstoff extrudiertes Profil. Die Reaktionskräfte, welche auf die in die Dichtung einfahrende Scheibe 9 ausgeübt werden, werden deshalb ausschließlich durch die elastomeren Biegespannungen in den Dichtlippen 6 und 7 erzeugt, welche durch die Scheibe 9 zwangsweise zur Seite gebogen werden.

Bei dem Ausführungsbeispiel der Erfindung gemäß Figur 1 ist an der Rückseite der längeren Dichtlippe 6 eine Feder 12 vorgesehen, bei welcher es sich im gezeichneten Fall um ein elastomeres Hohlprofil handelt, welches einstückig mit der Dichtung insgesamt extrudiert ist. Das Hohlprofil kann wie dargestellt ein im Querschnitt ungefähr zylinderförmiges Schlauchprofil sein; es sind aber auch andere Querschnittsformen möglich. Die Dichtlippe 6 kann in diesem Fall schwächer ausgebildet sein als beim Stand der Technik gemäß Figur 3, sie kann sogar
eine besondere örtliche Schwachstelle 14 haben, welche eine geringere elastomere Rückstellkraft zur Folge hat, die durch die elastische Rückstellkraft der Feder 12 kompensiert wird.

Wenn in diese Dichtung eine Scheibe 9 einfährt, wird durch das Abbiegen der geschwächten Dichtlippe 6 zunächst nur eine geringe Reaktionskraft auf den Antrieb der Scheibe 9 ausgeübt, bis die als Hohlprofil ausgebildete Feder 12 gegen den Schenke 2 stößt und dann den gummielastischen Widerstand plötzlich steil ansteigen läßt.

Das in Figur 2 dargestellte Ausführungsbeispiel unterscheidet sich von dem in Figur 1 dargestellten Ausführungsbeispiel dahingehend, daß zwischen der längeren Dichtlippe 6 und dem Schenke 2 eine keilförmige Blattfeder 13 eingesetzt ist. Auch in diesem Fall kann die Dichtlippe 6 gegenüber dem Stand der Technik gemäß Figur 3 geschwächt sein, weil die für eine einwandfreie Dichtung erforderliche Andrückkraft durch die Blattfeder 13 hervorgerufen werden kann. Die Reaktionskraft, die beim Einfahren der Scheibe 9 in die Dichtung ausgeübt wird, wird daher im wesentlichen durch das charakteristische, elastische Verhalten der Blattfeder 13 bestimmt.

### Gewerbliche Anwendbarkeit:

Die Erfindung ist im Automobilbau anwendbar.

## Patentansprüche

1. Dichtung für den oberen Rand einer motorisch versenkbaren Seitenscheibe eines Automobils mit im Querschnitt U-förmigem Grundkörper (1) mit zwei Schenkeln (2, 3), wobei von einem der Schenkel oder von beiden Schenkeln (2, 3) eine Dichtlippe (6, 7) ausgeht, welche sich in den vom U-förmigen Grundkörper (1) umfaßten Raum (5) hinein erstreckt,
**dadurch gekennzeichnet,** daß zwischen wenigstens einer der Dichtlippen (6) und dem Schenkel (2), von welchem sie ausgeht, eine Feder (12, 13) angeordnet ist.

2. Dichtung nach Anspruch 1, **dadurch gekennzeichnet**, daß die Feder (12, 13) ein Fortsatz der Dichtlippe (6) oder des Schenkels (2) ist, von welchem sie ausgeht.

3. Dichtung nach Anspruch 1, **dadurch gekennzeichnet**, daß die Dichtlippe (6) als Hohlkammerprofil ausgebildet ist.

4. Dichtung nach Anspruch 2 oder 3, **dadurch gekennzeichnet**, daß die Feder (12) wie die Dichtung aus elastomerem Werkstoff besteht.

5. Dichtung nach einem der Ansprüche 1 bis 4, **dadurch gekennzeichnet**, daß die Feder (12) Abstand vom Schenkel (2) des Grundkörpers (1) hat, wenn die Scheibe (9) nicht in der Dichtung steckt.

6. Dichtung nach einem der Ansprüche 1 bis 3, **dadurch gekennzeichnet**, daß die Feder (13) eine metallische Blattfeder ist.

7. Dichtung nach Anspruch 6, **dadurch gekennzeichnet**, daß die Blattfeder (13) ein keilförmiges Profil hat.

8. Dichtung nach Anspruch 6 oder 7, **dadurch gekennzeichnet**, daß die Blattfeder (13) Ausnehmungen hat.

9. Dichtung nach Anspruch 6, 7 oder 8, **dadurch gekennzeichnet**, daß in der Dichtung mehrere Blattfedern (13) mit Abstand hintereinander angeordnet sind.

10. Dichtung nach einem der vorstehenden Ansprüche, **dadurch gekennzeichnet**, daß sie und die Feder (12) ein Verbundprofil bilden.

11. Dichtung nach einem der vorstehenden Ansprüche, bei welcher von dem einen Schenkel (2) des Grundkörpers (1) eine längere Dichtlippe (6) und von dem anderen Schenkel (3) des Grundkörpers (1) eine kürzere Dichtlippe (7) ausgeht, **dadurch gekennzeichnet**, daß die Feder (12, 13) zwischen der längeren Dichtlippe (6) und dem Schenke (2), von welchem sie ausgeht, angeordnet ist.

## Claims

1. Seal for the upper edge of a motorized side window of an automobile with a basal body (1) of U-shaped cross-section with two legs (2, 3), whereby a sealing lip (6, 7) extends from one of the legs or from both legs (2, 3) and projects into the space (5) contained by the U-shaped basal body (1), **characterized in that** a spring (12, 13) is arranged between at least one of the sealing lips (6) and the leg (2) from which the sealing lip extends.

2. Seal according to claim 1, **characterized in that** the spring (12, 13) is an extension of the sealing lip (6) or of the leg (2) from which the sealing lip extends.

3. Seal according to claim 1, **characterized in that** the sealing lip (6) is designed as a hollow core profile.

4. Seal according to claim 2 or 3, **characterized in that** the spring (12) is made from the same elastomeric material as the seal.

5. Seal according to any of the claims 1 through 4, **characterized in that** the spring (12) does not contact the leg (2) of the basal body (1) when the window pane (9) is outside the seal.

6. Seal according to any of the claims 1 through 3, **characterized in that** the spring (13) is a metallic plate spring.

7. Seal according to claim 6, **characterized in that** the plate spring (13) has a wedge-shaped cross-section.

8. Seal according to claim 6 or 7, **characterized in that** the plate spring (13) has cut-outs.

9. Seal according to claim 6, 7 or 8, **characterized in that** inside the seal several plate springs (13) are arranged one after another along the seal and separated from each other.

10. Seal according to one of the preceding claims, **characterized in that** the seal and the spring (12) form a composite profile.

11. Seal according to any of the preceding claims, in which a longer sealing lip (6) extends from one of the legs (2) of the basal body (1) and a shorter sealing lip (7) extends from the other leg (3) of the basal body (1), **characterized in that** the spring (12, 13) is arranged between the longer sealing lip (6) and the leg (2) from which the sealing lip extends.

## Revendications

1. Joint d'étanchéité pour le bord supérieur d'une vitre latérale actionnée à moteur d'une automobile, comportant un corps de base (1) présentant une section transversale en forme de U et deux côtés (2, 3), une lèvre d'étanchéité (6, 7) qui s'étend à l'intérieur de l'espace (5) compris dans le corps de base (1) en forme de U, partant de l'un des côtés ou des deux côtés (2, 3), caractérisé en ce qu'un ressort est disposé entre au moins l'une des lèvres d'étanchéité (6) et le côté (2).

2. Joint d'étanchéité selon la revendication 1, caractérisé en ce que le ressort (12, 13) est un prolongement de la lèvre d'étanchéité (6) ou du côté (2) qui lui sert de point de départ.

3. Joint d'étanchéité selon la revendication 1, caractérisé en ce que la lèvre d'étanchéité (6) est conçue comme une cavité profilée.

4. Joint d'étanchéité selon la revendication 2 ou 3, caractérisé en ce que le ressort (12) comme le joint d'étanchéité sont réalisés dans une matière élastomère.

5. Joint d'étanchéité selon l'une quelconque des revendications 1 à 4, caractérisé en ce que le ressort (12) est distant du côté (2) du corps de base (1) quand la vitre (9) ne se trouve pas enfoncée dans le joint d'étanchéité.

6. Joint d'étanchéité selon l'une quelconque des revendications 1 à 3, caractérisé en ce que le ressort (13) est un ressort métallique à lames plates.

7. Joint d'étanchéité selon la revendication 6, caractérisé en ce que le ressort à lames plates (13) a un profil cunéiforme.

8. Joint d'étanchéité selon la revendication 6 ou 7, caractérisé en ce que le ressort à lames plates (13) a des évidements.

9. Joint d'étanchéité selon l'une quelconque des revendications 6 à 8, caractérisé en ce que plusieurs ressorts à lames plates (13) sont disposés dans le joint d'étanchéité, à distance les uns derrière les autres.

10. Joint d'étanchéité selon l'une quelconque des revendications précédentes, caractérisé en ce que ledit joint d'étanchéité et le ressort (12) forment un profil combiné.

11. Joint d'étanchéité selon l'une quelconque des revendications précédentes, caractérisé en ce qu'une lèvre d'étanchéité (6) part de l'un des côtés (2) du corps de base (1) et en ce qu'une lèvre d'étanchéité (7) plus courte part de l'autre côté (3) du corps de base (1), et en ce que le ressort (12, 13) est disposé entre la lèvre d'étanchéité (6) plus longue et le côté (2) qui sert de point de départ à ladite lèvre.
